# EUROPEAN PATENT APPLICATION

(11) **EP 3 675 006 A1**
(43) Date of publication of application: **01.07.2020**
(21) Application number: 19383197.1
(22) Date of filing: 26.12.2019
(51) Int. Cl.: G06Q 10/02, G06Q 10/08, G06Q 50/30

(54) **MANAGEMENT SYSTEM OF A TRANSPORT SERVICE FOR A PASSENGER AND VEHICLE TO CARRY OUT THE TRANSPORT SERVICE FOR A PASSENGER**

(30) Priority: 31.12.2018 ES 201831309
(71) Applicant: Seat, S.A., 08760 Martorell (ES)
(72) Inventor: SOLÁ GOMFAUS, Andreu, 08760 Martorell (ES); LÓPEZ ROSA, Eva, 08760 Martorell (ES)
(74) Representative: Elzaburu S.L.P.

(57) **Abstract**

The invention relates to a management system of a transport service for a passenger and vehicle (111) to carry out the transport service for a passenger; wherein the management system of a transport service comprises a control unit (112) which transmits control signals to a first computer unit (114) of a vehicle (111) and to a portable electronic user device (113) via a telecommunications network (115), wherein the vehicle (111) and the portable electronic user device (113) are paired to carry out the transport service of the requesting user; as such, the control unit (112) receives a transport service request from a user from the portable electronic user device 113; wherein the transport request comprises a user pick-up location of origin and a user destination location; and the control unit (112) determines a candidate vehicle (111) from among at least one candidate vehicle (111) to offer the transport service.

## Description

### Object

The present invention relates, according to a first aspect, to a management system of a transport service for passengers of a vehicle.

A second aspect of the present invention relates to a vehicle for carrying out the transport service for a passenger.

### State of the art

A system for organising a transport service for passengers of a vehicle is known in the state of the art, wherein the system receives a transport service request from a first portable electronic first-user device. The request includes a first pick-up location and a first destination location. Based on the first pick-up location and the first destination location, the system can determine a plurality of vehicles available to provide the transport service requested by the requesting passenger. The system carries out a selection process to select a vehicle from the plurality of vehicles available to meet the transport service request.

Once a vehicle has been assigned to a predetermined transport service request and the assigned vehicle coincides at the location of origin with another vehicle also arriving at the same location of origin to meet a different transport service request, none of the requesting passengers or vehicles, which come to provide the transport service, are able to identify which vehicle or passenger has been assigned to each transport service request.

### Summary

The present invention seeks to solve one or more of the problems set forth above by means of a management system of a transport service for a user as defined in the claims.

The management system of a transport service for a user or passenger of a vehicle comprises a control unit configured to transmit control signals to a first computer unit of a vehicle and to a portable electronic user device via a telecommunications network, wherein the vehicle and the portable electronic user device are paired to carry out the transport service of the requesting user.

The first computer unit of the vehicle is a unit of the ECU electronic control unit type.

The control unit is configured to receive a transport service request from a user from the portable electronic user device. The transport request comprises a user pick-up location of origin and a user destination location. Transport request refers to a request made through any platform or software, so that the user indicates the location where they want to start the journey or transport service and the location where they want to end the transport service. Other information can be included in the transport request made by the user, such as the start time of the transport service and the number of people who will use the transport service.

The control unit determines a candidate vehicle from among at least one candidate vehicle to offer the transport service, based on the user pick-up location of origin; and assigns the candidate vehicle to the user's received transport service request. Thus, the control unit assigns a vehicle from among the possible vehicles to complete the journey requested by the user by means of some pairing algorithm between vehicle and transport service known in the state of the art.

Additionally, the control unit generates a pairing between the first computer unit of the assigned vehicle and the portable electronic user device; and the control unit assigns an identifier element to the generated pairing, wherein the identifier element is assigned from a plurality of predefined identifier elements stored in a database accessible from the control unit. Thus, when an available vehicle with the capacity to carry out the transport service has been detected according to the user's request, the control unit links the first computer unit of the assigned vehicle with the portable electronic device associated with the user, in order to receive information and provide information regarding the transport service to both devices.

The assigned identifier element is sent from the control unit to the first computer unit of the vehicle via the telecommunications network, together with a first instruction to display the assigned identifier element in a first external graphic display device of the assigned vehicle. The first instruction comprises a command signal for the first external graphic display device of the vehicle to display the identifier element. The instruction to display said assigned identifier element is based on the location of origin of the user's transport service request; in other words, the command signal indicating the moment of initiating the display of the identifier element depends on the location of origin of the user's transport request. In this way, the identifier element is only displayed in the vicinity of the location of origin of the transport service, that is, near the position where the user awaits the arrival of the vehicle to start the transport service, improving the energy efficiency of the system.

Also, the assigned identifier element is sent from the control unit to the portable electronic user device via the telecommunications network together with a second instruction to display said assigned identifier element in a second graphic display device. The second instruction comprises a command signal for the second graphic display device of the portable electronic user device to display the identifier element. Thus, the user will also be aware of the identifier element that will be displayed by the vehicle selected to carry out its transport service, thus being able to easily identify and find the vehicle with which they have been paired among the plurality of vehicles in the surroundings to carry out its transport service.

The assigned identifier element comprises a colour from a plurality of predefined colours stored in the database of the control unit; a text message from a plurality of predefined text messages also stored in the database of the control unit; a graphic element or similar stored in the database of the control unit. It is understood that these graphic elements can be combined in the most optimal way to generate combinations that avoid repetitions between the graphic elements, thus avoiding confusion among the users of the transport service.

It should be noted that the graphic display device is a multimedia screen of the LCD, LED, OLED type or similar, with the ability to display colours, images and/or messages outside the vehicle, so that the multimedia screen content can be easily viewed by a user on the roadway and at the location of origin of the transport service.

The identifier element received by the portable electronic user device can be configured by the user; as such, the control unit is configured to receive the identifier element configured by the user and assign the identifier element to the pairing generated between the first computer unit of the assigned vehicle and the portable electronic user device.

Once a transport service has been assigned to a vehicle, the control unit is configured to assign a free seat in the vehicle to the requesting user, who will occupy the assigned seat during the transport service.

The control unit sends the assigned seat to the first computer unit of the assigned vehicle. Therefore, the first instruction further comprises a command signal to activate an external light emitter of the vehicle based on the location of origin of the user transport service request and the seat of the vehicle assigned to the requesting user; in other words, at least one external light emitter of the vehicle is associated with the seat of the vehicle assigned to the requesting user. The external light emitter associated with the assigned seat of the vehicle will illuminate when the vehicle approaches the location of origin of the transport service, indicating to the user the access door to the vehicle to be used. The light emitter is located on an outer area of the vehicle so that it can be easily seen by a user on the roadway and at the location of origin of the transport service.

The control unit sends the assigned seat to the portable electronic user device and, consequently, the second instruction comprises a command signal to display the assigned seat by means of the second graphic display device of the portable electronic user device. Thus, the user also knows in advance the access door to the vehicle to be used.

According to one embodiment, the control unit is configured to estimate a start time of the transport service of a first requesting user, and determine whether at least one second transport service coincides with the transport service of the first user, coincides being understood as the pick-up location of origin and the start time of the second transport service totally or partially coinciding with the pick-up location of origin and the start time of the first transport service. It therefore aims to identify among the transport services previously paired by the control unit those vehicles that provide a transport service with the same service start location and same start time as the start location and start time of the transport service currently requested by the user.

The control unit retrieves a second identifier element assigned to the second transport service determined as coinciding and assigns an identifier element to the generated pairing which is different from the first identifier element of the first generated pairing. In this way, efficiency and precision in the generation of identifier elements are improved, avoiding the assignment of the same or similar transport service to two transport services coinciding at the location of origin and start time.

In particular, the plurality of predefined identifier elements stored in the database of the control unit are classified into groups and/or subgroups, wherein the plurality of identifier elements of each group or subgroup comprise a common feature. By way of example, the plurality of identifier elements can be classified by warm colours and cold colours. Thus, if two transport services are determined as coinciding, one of the transport services is assigned a warm colour as an identifier element and the other transport service is assigned a cold colour as an identifier element.

The control unit sends to the first computer unit the first instruction comprising an instant of time when the first graphic display device must initiate the display of the identifier element.

According to a first embodiment, the instant of time is a function of the estimated start time of the user's transport service, so that when a real time is equal to or greater than a predefined interval prior to the estimated start time of the user's transport service, the first computer unit sends a control signal to the first graphic display device to display the identifier element. Real time refers to an instant of time according to Coordinated Universal Time.

According to a second embodiment, the instant of time is a function of distance between the vehicle and the portable electronic user device, so that when a distance between the portable electronic user device and the vehicle is equal to or less than a predetermined distance, the first computer unit sends a control signal to the first graphic display device to initiate the display of the identifier element. Both alternatives make it possible to optimise the start time of the display of the identifier element, resulting in better system efficiency and avoiding misunderstandings by other users.

The instant of time is a function of a number of second transport services coinciding with the location of origin and the estimated start time of the user's transport service. Thus, in the event of an agglomeration of transport service requests at a nearby location of origin and at a similar service start time, the identifier element is displayed beforehand, so that it is more likely that the vehicle can be identified.

The control unit sends the second instruction to the portable electronic user device of the second requesting user which comprises a command signal for the portable electronic user device to send, in turn, a control signal to the second graphic display device to display the second identifier element, thus generating the complete pairing between both devices.

According to a second aspect of the present invention, a vehicle comprises a first computer unit in communication with the control unit via a telecommunications network, wherein the control unit generates at least one pairing between the first computer unit and a first portable electronic user device to assign the vehicle to a transport service request generated by a requesting user, wherein the transport service request comprises a location of origin and a destination location.

The vehicle comprises a first graphic display device arranged outside the vehicle and in communication with the first computer unit of the vehicle, which receives a first identifier element associated with the pairing between the first computer unit and the first portable electronic user device, wherein the first identifier element is provided by the control unit.

The control unit transmits via a telecommunications network a first instruction to display the first assigned identifier element, wherein the first instruction is a function of the pick-up location of origin of the requesting user, and wherein the first computer unit of the vehicle sends command signals to the first graphic display device to display the first identifier element received, based on the first instruction received.

The vehicle comprises a light emitter associated with each seat of the vehicle, wherein the light emitter is arranged outside the vehicle and in communication with the first computer unit. Light emitter associated with a seat of the vehicle refers to a light emitter that is arranged in an area adjacent to or near said seat of the vehicle. By way of example, the light emitters are arranged in each access door to the vehicle or in each access door handle to the vehicle, each light emitter being activated depending on the access door that must be used by the nearest user according to the assigned seat.

The first computer unit receives a seat of the vehicle assigned to the requesting user during the transport service from the control unit via the telecommunications network.

The first computer unit receives the first instruction to activate the external light emitter corresponding to the assigned seat of the vehicle based on the location of origin of the transport service request of the requesting user.

The first computer unit sends command signals to the external light emitter to activate the external light emitter based on the first instruction received.

The light emitter is arranged on the door frame of the vehicle associated with a seat of the vehicle.

Alternatively, the light emitter is arranged on the door handle of the vehicle associated with a seat of the vehicle.

### Brief description of the figures

A more detailed explanation is given in the description that follows and which is based on the attached figures:

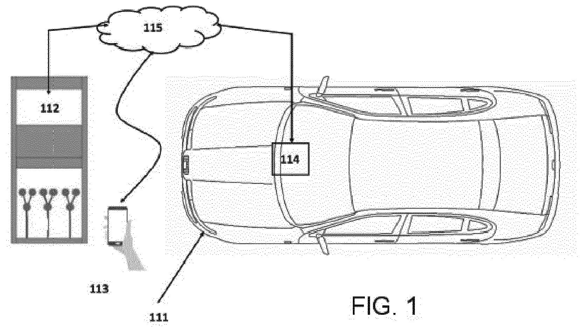

Figure 1 shows a block diagram of a management system of a transport service for a user or passenger of a vehicle.

### Description

Referring now to Figure 1, a management system of a transport service for a user or passenger of a vehicle 111 is shown, comprising a control unit 112 configured to transmit control signals to a first computer unit 114 of a vehicle 111 and to a portable electronic user device 113 via a telecommunications network 115, wherein the vehicle 111 and the portable electronic user device 113 are paired to carry out the transport service of the requesting user.

The first computer unit 114 of the vehicle 111 is a unit of the ECU electronic control unit 112 type.

The control unit 112 is configured to receive a transport service request from a user from the portable electronic user device 113. The transport request comprises a user pick-up location of origin and a user destination location. Alternatively, the transport request can be made by the user from any electronic system, such as a computer, a tablet, etc. In these cases, each user must have a portable electronic user device 113 associated with their user account, so that said portable electronic user device 113 can be paired with the vehicle 111 assigned by the control unit 112.

The control unit 112 determines a candidate vehicle 111 from at least one vehicle 111 available to offer the transport service, based on the user's pick-up location of origin, and it assigns the candidate vehicle 111 to the user's transport service request received. Other variables can be taken into account to assign a vehicle 111 to a specific transport service, such as the location of each vehicle 111, the journey covered by each vehicle 111, the number of free seats in each vehicle 111, among others.

Additionally, the control unit 112 generates a pairing between the first computer unit 114 of the assigned vehicle 111 and the portable electronic user device 113; and the control unit 112 assigns an identifier element to the generated pairing, wherein the identifier element is assigned from a plurality of predefined identifier elements stored in a database accessible from the control unit 112.

The assigned identifier element is sent from the control unit 112 to the first computer unit 114 of the vehicle 111 via the telecommunications network 115, together with a first instruction to display the assigned identifier element in a first external graphic display device of the assigned vehicle 111.

The instruction to display said assigned identifier element is based on the location of origin of the user's transport service request, wherein the first instruction comprises a command signal for the first external graphic display device of the vehicle 111 to display the element identifier. Thus, when the vehicle 111 assigned to carry out the user's transport service approaches the location of origin of the transport service, the first external graphic display device of the vehicle 111 receives a control signal to display the received identifier element.

Also, the assigned identifier element is sent from the control unit 112 to the portable electronic user device 113 via the telecommunications network 115 together with a second instruction to display said assigned identifier element in a second graphic display device. The second instruction comprises a command signal for the second graphic display device of the portable electronic user device 113 to display the identifier element. The identifier element can be displayed at any time in the second graphic display device, being able to be both at the moment it receives the second instruction or at the moment when the user approaches the location of origin of the transport service.

The assigned identifier element comprises a colour from a plurality of predefined colours stored in the database of the control unit 112; a text message from a plurality of predefined text messages also stored in the database of the control unit 112; a graphic element or similar stored in the database of the control unit 112, which may be a combination of some or all of the elements mentioned.

It should be noted that the graphic display device is a multimedia screen of the LCD, LED, OLED type or similar, with the ability to display colours, images and/or messages outside the vehicle 111.

The identifier element received by the portable electronic user device 113 can be configured by the user; as such, the control unit 112 is configured to receive the identifier element configured by the user and assign the identifier element to the pairing generated between the first computer unit 114 of the assigned vehicle 111 and the portable electronic user device 113. In case the user wishes that the identifier element is not randomly assigned, it is possible for them to assign the identifier element at their own will.

Once a transport service has been assigned to a vehicle 111, the control unit 112 is configured to assign a free seat in the vehicle 111 to the requesting user, who will occupy the assigned seat during the transport service.

The control unit 112 sends the assigned seat to the first computer unit 114 of the assigned vehicle 111. Therefore, the first instruction further comprises a command signal to activate an external light emitter of the vehicle 111 based on the location of origin of the user transport service request and the seat of the vehicle 111 assigned to the requesting user; in other words, at least one external light emitter of the vehicle 111 is associated with the seat of the vehicle 111 assigned to the requesting user. Therefore, by means of the identifier element displayed in the first graphic display device, the user can identify the vehicle 111 assigned to their transport service request and by means of the activation of the external light emitter of the vehicle 111 the user can identify the access area to the vehicle 111 in order to sit in the seat assigned to their transport service request.

The control unit 112 sends the assigned seat to the portable electronic user device 113 and, consequently, the second instruction comprises a command signal to display the assigned seat by means of the second graphic display device of the portable electronic user device 113. Said information will also be available in the portable electronic user device 113 to be consulted by the user at any time.

The control unit 112 is configured to estimate a start time of the transport service of a first requesting user, and determine whether at least a second transport service coinciding with the transport service of the first user can be attended simultaneously, because the pick-up location of origin and the start time of the second transport service totally or partially coincide with the pick-up location of origin and the start time of the transport service of the first requesting user. If the control unit 112 determines that a second previously assigned transport service coincides with the newly assigned transport service, it will take a series of measures described below, so that the identifier element is not common in vehicle 111, thus increasing the quality of the service and avoiding confusion among the users.

In particular, the control unit 112 retrieves a second identifier element assigned to the second transport service determined as coinciding and assigns an identifier element to the generated pairing which is different from the first generated pairing. The control unit 112 reviews the similarity between the colour assigned to both identifier elements and/or the text message assigned to both identifier elements and/or the graphic symbol assigned to both identifier elements. In case of detecting a high degree of similarity, the control unit 112 assigns a new identifier element different from at least a second identifier element already assigned to said second coinciding transport service.

The control unit 112 sends to the first computer unit 114 the first instruction comprising an instant of time when the first graphic display device must initiate the display of the identifier element.

The instant of time is a function of the estimated start time of the user's transport service, so that when a real time is equal to or greater than a predefined interval prior to the estimated start time of the user's transport service, the first computer unit 114 sends a control signal to the first graphic display device to display the identifier element.

Alternatively, the instant of time is a function of distance between the vehicle 111 and the portable electronic user device 113, so that when a distance between the portable electronic user device 113 and the vehicle 111 is equal to or less than a predetermined distance, the first computer unit 114 sends a control signal to the first graphic display device to initiate the display of the identifier element.

The instant of time is a function of a number of second transport services coinciding with the location of origin and the estimated start time of the user's transport service, so that if the control unit 112 determines a high number of coinciding second transport services, the previous time interval at the start time of the transport service will be longer. On the contrary if the control unit 112 determines a low number of coinciding second transport services, the previous time interval at the start time of the transport service will be shorter.

The control unit 112 sends the second instruction to the portable electronic user device 113 of the requesting user comprising a command signal for the portable electronic user device 113 to send, in turn, a control signal to the second graphic display device to display the identifier element.

According to a second aspect of the present invention, the vehicle 111 comprises a first computer unit 114 in communication with the control unit 112 via a telecommunications network 115, wherein the control unit 112 generates at least one pairing between the first computer unit 114 and a first portable electronic user device 113 to assign the vehicle 111 to a transport service request generated by a requesting user, wherein the transport service request comprises a pick-up location of origin and a destination location.

The vehicle 111 comprises a first graphic display device arranged outside the vehicle 111 and in communication with the first computer unit 114 of the vehicle 111, which receives a first identifier element associated with the pairing between the first computer unit 114 and the first portable electronic user device 113, wherein the first identifier element is provided by the control unit 112.

The control unit 112 transmits via a telecommunications network 115 a first instruction to display the first assigned identifier element, wherein the first instruction is a function of the pick-up location of origin of the requesting user, and sends command signals to the first graphic display device to display the first identifier element received.

The vehicle 111 comprises a light emitter associated with each of the seats of the vehicle 111, wherein the light emitter is arranged outside the vehicle 111 and in communication with the first computer unit 114.

The first computer unit 114 receives a seat of the vehicle 111 assigned to the requesting user during the transport service from the control unit 112 via the telecommunications network 115.

The first computer unit 114 receives the first instruction to activate the external light emitter corresponding to the assigned seat of the vehicle 111 based on the location of origin of the transport service request of the requesting user.

The first computer unit 114 sends command signals to the external light emitter to activate the external light emitter based on the first instruction received.

According to a first embodiment, the light emitter is arranged on the door frame of the vehicle 111 associated with a seat of the vehicle 111. Thus, the perimeter of the access door to the vehicle 111 that must be used by the user will be illuminated. Advantageously, said perimeter of the door will be illuminated when the vehicle 111 comprises a position close to the location of origin of the transport service or, alternatively, a position close to the position of the portable electronic user device 113. The marked door will be the closest to the seat assigned for the transport service or, alternatively, the one that for other reasons must be used for the transport service.

Alternatively, the light emitter is arranged on the door handle of the vehicle 111 associated with a seat of the vehicle 111. Thus, the door handle of the vehicle 111 that must be used by the user will be illuminated. Advantageously, said door handle will be illuminated when the vehicle 111 comprises a position close to the location of origin of the transport service or, alternatively, a position close to the position of the portable electronic user device 113.

As a result, the door frame, door handle, etc. are illuminated to indicate which side of the vehicle 111 the requesting user must access the interior cabin of the vehicle 111.

When two transport service requests are received by the control unit 112, which will be handled by the same vehicle 111; the control unit 112 assigns different identifier elements to each transport service request received, so that each requesting user is assured that the vehicle 111 that picks them up is the vehicle 111 that has been assigned by the control unit 112 to handle the transport service request. Therefore, the user experience is increased.

The first computer unit 114 is connected to a first global satellite positioning GPS module, so that the first computer unit 114 is capable of transmitting in real time the positioning and location coordinates of the first vehicle 111 to the control unit 112; wherein real time is understood as instant time.

Similarly, the portable electronic user device 113 comprises a second global satellite positioning GPS module, so that the portable electronic user device 113 also transmits in real time the positioning and location coordinates of the user requesting the transport service.

Said positioning and location coordinates of both the vehicle 111 and the portable electronic user device 113 can be used to determine the instant of time when the first computer unit sends the control signal to the first graphic display device to display the identifier element associated with the transport service.

Since one same vehicle 111 can handle more than one transport service request from different users, and additionally, a plurality of vehicles 111 can handle user service requests with one same location of origin and one same start time, so that each requesting user recognises which vehicle 111 has been assigned to their transport service request, the identifier element corresponding to the requesting user will be shown by the first graphic display device of vehicle 111 assigned well in advance for the requesting user to identify the vehicle 111 and the side of the vehicle 111 through which they must access the interior cabin of the vehicle 111.

The first graphic display device of the vehicle 111 may be a lighting arrangement comprising at least one lighting element of the vehicle 111 electrically connected to the first computer unit 114 of the vehicle 111; as such, the first computer unit 114 is capable of modifying the intensity and colour of the vehicle lighting element between at least one first lighting setting and a second lighting setting stored by the first computer unit 114 of the vehicle 111.

The lighting setting between the first lighting setting and the second lighting setting can be achieved by the requesting user through the portable electronic user device 113.

The lighting element is a light source of the LED light emitting diode cable type, interior illumination of the vehicle 111, fibre optic cable or similar and the light source can be embedded in a door frame of the vehicle 111, in the front and/or rear windshield frame of the vehicle 111 and on the external door handle frame of the vehicle 111.

Alternatively, the first graphic display device may be arranged above the roof of the vehicle, wherein the first graphic display device is oriented towards the sides of the vehicle, that is, configured to display information in a direction perpendicular to the direction of travel of the vehicle 111, in the horizontal plane defined by the roadway where the vehicle 111 circulates.

### LIST OF NUMERICAL REFERENCES

- 111: vehicle
- 112: control unit
- 113: portable electronic user device
- 114: first computer unit
- 115: telecommunications network

## Claims

1. A management system of a transport service for a user, comprising a control unit (112) configured to transmit control signals to a first computer unit (114) of a vehicle (111) and to a portable electronic user device (113) via a telecommunications network (115), wherein the vehicle (111) and the portable electronic user device (113) can be paired to carry out the user's transport service; wherein the control unit (112) is configured to:
receive a transport service request from a user from the portable electronic user device (113), wherein the transport request comprises a location of origin and a destination location,
determine, based on the location of origin and the destination location of the transport service request received, a candidate vehicle (111) to offer the transport service,
assign the candidate vehicle (111) to the user's transport service request,
generate a pairing between the first computer unit (114) of the assigned vehicle (111) and the portable electronic user device (113),
**characterised in that** the control unit (112) is configured to:
assign an identifier element to the generated pairing, wherein the identifier element is assigned among one of the plurality of predefined identifier elements stored in a database of the control unit (112),
send the assigned identifier element and a first instruction to display said assigned identifier element to the first computer unit (114) of the vehicle (111) via the telecommunications network (115), wherein the instruction to display said assigned identifier element is based on the location of origin of the user's transport service request, wherein the first instruction comprises a command signal for a first external graphic display device of the vehicle (111) to display the identifier element,
send the assigned identifier element and a second instruction to display said assigned identifier element to the portable electronic user device (113) via the telecommunications network (115), wherein the second instruction comprises a command signal for a second external graphic display device of the portable electronic user device (113) to display the identifier element.

2. The system according to claim 1, wherein the assigned identifier element comprises a colour from a plurality of predefined colours stored in the database of the control unit (112).

3. The system according to claim 1 or 2, wherein the assigned identifier element comprises a text message from a plurality of predefined text messages stored in the database of the control unit (112).

4. The system according to any of the preceding claims, wherein the user configures the identifier element by means of the portable electronic user device (113), wherein the control unit (112) is configured to receive the identifier element configured by the user and assign the identifier element to the pairing generated between the first computer unit (114) of the assigned vehicle (111) and the portable electronic user device (113).

5. The system according to any of the preceding claims, wherein the control unit is configured to:
- assign the user a seat of the vehicle (111) to occupy during the transport service,
- send the assigned seat to the first computer unit (114) of the vehicle (111), wherein the first instruction further comprises a command signal to activate at least one external light emitter of the vehicle (111) based on the location of origin of the user's transport service request and to the assigned seat of the vehicle (111), wherein the at least one external light emitter of the vehicle (111) is associated with the assigned seat of the vehicle (111),
- send the assigned seat to the portable electronic user device (113), wherein the second instruction comprises a command signal to display the assigned seat by means of the second graphic display device of the portable electronic user device (113).

6. The system according to any of the preceding claims, wherein the control unit (112) is configured to:
- estimate a start time of the user's transport service,
- determining at least a second transport service coinciding with the user's transport service, wherein the at least one second transport service has been previously assigned by the control unit (112) to a second user, wherein the location of origin and the start time of the at least one second transport service and of the user's transport service coincide,
- retrieve at least one second identifier element assigned to the at least one second transport service determined as coinciding, and
- assign an identifier element to the generated pairing which is different from the at least one second identifier element retrieved.

7. The system according to claim 6, wherein the first instruction sent by the control unit (112) to the first computer unit (114) of the vehicle (111) comprises an instant of time when the first computer unit (114) sends a control signal to the first graphic display device to display the identifier element.

8. The system according to claim 7, wherein the instant of time is based on the estimated start time of the user's transport service, so that when a real time is equal to or greater than a predefined interval prior to the estimated start time of the user's transport service, the first computer unit (114) sends a control signal to the first graphic display device to display the identifier element.

9. The system according to claim 7, wherein the instant of time is based on a distance between the vehicle (111) and the portable electronic user device (113), so that when a distance between the portable electronic user device (113) and the vehicle (111) is equal to or less than a predetermined distance, the first computer unit (114) sends a control signal to the first graphic display device to display the identifier element.

10. The system according to any of claims 7 to 9, wherein the instant of time is based on a number of second transport services coinciding with the location of origin and the estimated start time of the user's transport service.

11. The system according to any of the preceding claims, wherein the second instruction sent by the control unit (112) to that of the portable electronic user device (113) comprises a command signal for the portable electronic user device (113) to send a control signal to the second graphic display device to display the identifier element.

12. A vehicle for carrying out a transport service for a user, **characterised in that** it comprises a first computer unit (114) in communication with a control unit (112) via a telecommunications network (115), wherein the control unit (112) is configured to generate a pairing between the first computer unit (114) and a portable electronic user device (113) to assign the vehicle (111) to a transport service request generated by a user, wherein the transport service request comprises a location of origin and a location of destination, wherein the vehicle (111) comprises a first graphic display device arranged outside the vehicle (111) and in communication with the first computer unit (114), wherein the first computer unit (114) is configured to:
- receive an identifier element associated with the pairing between the first computer unit (114) and the portable electronic user device (113), via a telecommunications network (115), wherein the identifier element is generated by the control unit (112),
- receive a first instruction to display said assigned identifier element via a telecommunications network (115), wherein the first instruction is generated by the control unit (112), wherein the first instruction is based on the location of origin of the user's transport service request, and
- send command signals to the first graphic display device to display the identifier element received based on the first instruction received.

13. The vehicle according to claim 12, wherein the vehicle (111) comprises at least one light emitter associated with each of the seats of the vehicle (111), wherein the at least one light emitter is arranged outside the vehicle (111) and in communication with the first computer unit (114), wherein the first computer unit (114) is configured to:
- receive a seat of the vehicle (111) assigned to the user to be occupied during the transport service by the control unit (112), via a telecommunications network (115),
- receive the first instruction to activate the at least one external light emitter, via the telecommunications network (115), wherein the first instruction is based on the location of origin of the user's transport service request and the assigned seat of the vehicle (111), and
- send command signals to the at least one external light emitter to activate said at least one external light emitter based on the first instruction received.

14. The vehicle according to claim 13, wherein the at least one light emitter is embedded in each of the door frames of the vehicle (111), wherein each door frame is associated with a seat of the vehicle (111).

15. The vehicle according to claim 13, wherein the at least one light emitter is arranged in each door handle of the vehicle (111), wherein each door handle is associated with a seat of the vehicle (111).
